# EUROPEAN PATENT APPLICATION

(11) **EP 4 564 077 A1**
(43) Date of publication of application: **04.06.2025**
(21) Application number: 23212937.9
(22) Date of filing: 29.11.2023
(51) Int. Cl.: G02B 26/08, G02B 26/10

(54) **QUASI-STATIC ACTUATION OF A MEMS MIRROR**

(71) Applicant: Murata Manufacturing Co., Ltd., Nagaokakyo-shi, Kyoto 617-8555 (JP)
(72) Inventor: BLOMQVIST, Anssi, 00980 Helsinki (FI); RYTKÖNEN, Ville-Pekka, 01820 Klaukkala (FI)
(74) Representative: Boco IP Oy Ab

(57) **Abstract**

The disclosure relates to MEMS mirror apparatus and a method to drive a MEMS mirror apparatus. A reflector entity comprising a reflector (10), or a reflector (10) and a gimbal (15) is configured to be driven into a quasistatic see-saw motion about a quasi-static oscillation axis (100) by means of electrostatically driving at least one elongated drive plate (20a, 20b) into a first drive motion. The drive motion is conveyed to the reflector entity by means of at least one lever (22a, 22b) extending from the at least one elongated drive plate (20a, 20b) and at least one first spring (18a, 18b) coupling the at least one lever (22a, 22b) to the reflector entity or to an arm (19) extending from the reflector entity. The first drive motion is a quasi-static see-saw drive motion of the elongated drive plate (20a, 20b) about a drive axis (110a, 110b) aligned with longitudinal dimension of the elongated drive plate (20a, 20b).

## Description

### FIELD OF THE DISCLOSURE

The present disclosure relates to microelectromechanical (MEMS) mirrors, and particularly to two-axis actuated scanning mirrors.

### BACKGROUND OF THE DISCLOSURE

Two-axis microelectromechanical (MEMS) mirrors can be used in imaging devices such as light-detecting and ranging sensors (LIDARs), automotive headlights, augmented reality (AR) glasses and so on. A MEMS mirror may contain at least one moving reflector which can reflect a light beam or light beams in at least one direction from a laser emitter towards the surrounding environment.

By reflecting laser light beam(s) in two different directions, it is possible to build 3D map of the scanned area. Two-axis MEMS mirrors may be configured for a movement about (1) a higher frequency oscillation axis (hf-axis) driven in resonance, and (2) a lower frequency oscillation axis, referred to as a quasi-static oscillation axis or quasi-static axis (qs-axis). Oscillation about the qs-axis is preferably linearly controlled and the oscillation about the qs-axis can even be placed temporarily into one of plurality of static, differently deflected positions. In this context, the lower frequency oscillation is referred to as quasi-static oscillation, in short "qs-oscillation" and the higher frequency oscillation is referred to as the "hf-oscillation". Frequency of the hf-oscillation is referred to as the second frequency. The term quasi-static oscillation refers to an oscillation motion that may be discontinuous in nature, such that the oscillating element momentarily stops at one or more positions before moving to another position. In other words, the oscillation occurs as a series of movements between a rest position and a plurality of temporarily static deflection (tilting) positions. Despite the intermediate stops, the drive frequency of the qs-oscillation, referred to as the first drive frequency, is determined based on period of a full oscillation cycle. Additionally, MEMS mirrors may benefit from large tilting displacement to allow the beam to be directed to a wide range of angles or positions. Preferable oscillation mode of a MEMS mirror is a see-saw motion about an oscillation axis. In resonance mode the frequency of excitation, in other words the drive frequency, matches the natural frequency of the reflector resulting in the reflector oscillation with large amplitudes. WO2021125038A1 demonstrates a two-axis MEMS mirror with slow and fast piezoelectrically driven actuation modes. Since piezoelectric actuators may exhibit hysteresis, their use for placing the mirror into static tilted position during quasi-static actuation mode is not easily achieved. Additionally, the loose moving structures may suffer from vertical vibrations, which is not desired in MEMS mirror.

Technical challenges in the above-mentioned MEMS mirror applications are that it is challenging to reach high enough tilt amplitude especially about the qs-axis. On the other hand, to facilitate oscillations in resonance with the hf-axis, there should be low damping for the hf-axis. Low damping of the hf-oscillation can be achieved by placing the resonating MEMS mirror in a low-pressure sealed cavity, but this causes additional problems because in the low-pressure sealed cavity, the qs-oscillation becomes underdamped, and it is hard to control the qs-oscillation with a limited drive force to prevent any unwanted motions or oscillations.

### BRIEF DESCRIPTION

The disclosure relates to a MEMS mirror device, and particularly to an arrangement to facilitate improved quasi-static oscillation (qs-oscillation) of a reflector entity of the MEMS mirror device. The present disclosure further concerns a method for driving oscillation of a reflector entity of a MEMS mirror device enabled by the arrangement.

An object of the present disclosure is to provide a MEMS mirror with a drive mechanism and a driving method so as to solve the above-mentioned problems.

The object of the disclosure is achieved by an arrangement and a method which characterized by what is stated in the independent claims. The preferred embodiments of the disclosure are disclosed in the dependent claims.

According to embodiments of the invention, a MEMS mirror apparatus is provided. The MEMS mirror apparatus comprises a reflector entity comprising a reflector, or a reflector and a gimbal. The reflector entity is configured to be driven into a quasistatic see-saw motion about a quasi-static oscillation axis. The quasi-static oscillation axis is aligned with a frame plane of the MEMS mirror apparatus. The MEMS mirror apparatus comprises at least one elongated drive plate configured to be driven into a first drive motion, at least one first actuator, and at least one lever extending from the at least one elongated drive plate and at least one first spring coupling the at least one lever to the reflector entity or to an arm extending from the reflector entity. The at least one lever and the at least one first spring are configured to convey the first drive motion towards the reflector entity to cause the quasistatic see-saw motion of the reflector entity. The at least one first actuator is an electrostatic actuator comprising a moveable electrode plate formed by or attached to the respective elongated drive plate and a static electrode plate superposed with the moveable electrode plate above or below the frame plane. The first drive motion is a quasi-static see-saw drive motion of the elongated drive plate about a drive axis aligned with longitudinal dimension of the elongated drive plate. The drive axis is aligned with the frame plane.

According to some embodiments, the quasi-static oscillation axis and the drive axis are parallel and have a non-zero distance from each other. The at least one lever comprises i) a first end extending from the elongated drive plate along the frame plane in a direction orthogonal to the drive axis and ii) a second end attached to the reflector entity or to the arm by the at least one first spring. The attachment point of the at least one first spring and the respective one of said one or more levers and attachment point of the at least one first spring and the reflector entity or the arm are in vicinity of the quasi-static oscillation axis.

According to some embodiments, the second end of the at least one lever extends in the frame plane across the quasi-static oscillation axis and the at least one first spring is disposed at the side of the quasi-static oscillation axis that is away from the respective drive axis, and a pair of arms extend from the reflector entity in mutually opposite directions at two opposite sides of the reflector entity in direction of the quasi-static oscillation axis, wherein the at least one lever is coupled to the respective arm by said at least one first spring, or the at least one lever is coupled to the reflector entity by said at least one first spring.

According to some embodiments, the MEMS mirror apparatus comprises a single lever extending from the respective elongated drive plate, wherein the single lever is configured to convey the first drive motion of the respective elongated drive plate towards the reflector entity at one side of the reflector entity to cause the quasistatic see-saw motion.

According to some embodiments, the MEMS mirror apparatus comprises two levers extending from the respective elongated drive plate, wherein the two levers are at two opposite sides of the reflector entity, and wherein the two levers are configured to convey the first drive motion of the respective elongated drive plate towards the reflector entity at two opposite sides of the reflector entity to cause the quasistatic see-saw motion of the reflector entity.

According to some embodiments, the quasi-static oscillation axis is perpendicular to the drive axis, and the at least one lever comprises i) a first end extending from the elongated drive plate along the frame plane in a direction perpendicular to the drive axis and ii) a second end attached to the reflector entity by the at least one first spring at the side of the reflector entity that is away from the respective drive axis. The attachment point of the at least one first spring and the respective one of said one or more levers and attachment point of the at least one first spring and the reflector entity are in vicinity of the quasi-static oscillation axis.

According to some embodiments, the reflector entity is suspended to at least two suspension structures disposed on the quasi-static oscillation axis on two opposite sides of the reflector entity and wherein the reflector entity is coupled to each suspension structure by a respective second spring or the arm extending from the reflector entity is attached to the respective suspension structure by the respective second spring.

According to some embodiments, the first drive motion of at least one the drive plate has a maximum deflection amplitude that is in the range of 1/100 to 1/1000 of the longitudinal dimension of the elongated drive plate.

According to some embodiments, a gap between the at least one elongated drive plate and the respective static electrode plate driving the first drive motion of the at least one elongated drive plate is equal to or less than 2 µm, and length of the at least elongated drive plate, determined along the drive axis, is at least 1 mm.

According to some embodiments, the reflector entity comprises a reflector and a gimbal configured to enable separation of the quasistatic see-saw motion of the reflector and the gimbal and a second see-saw motion of the reflector. The MEMS mirror apparatus further comprises at least one second actuator configured to drive the reflector in the second see-saw motion with a second drive frequency, wherein the second see-saw motion is orthogonal to the quasistatic see-saw motion. The second drive frequency is between 20 kHz and 100 kHz, and a first drive frequency of the quasistatic oscillation is between 50 Hz and 300 Hz.

According to some embodiments, the at least one second actuator is a piezoelectric actuator.

According to another preferred embodiment, a method for driving oscillation of a reflector entity of a MEMS mirror device is provided. The MEMS mirror device comprises a reflector entity comprising a reflector or a reflector and a gimbal, at least one elongated drive plate, at least one lever extending from the at least one elongated drive plate and at least one first spring coupling the at least one lever to the reflector entity, or to an arm extending from the reflector entity, and at least one first actuator. The first actuator is an electrostatic actuator comprising a moveable electrode plate formed by or attached to the respective elongated drive plate and a static electrode plate superposed with the moveable electrode plate above or below a frame plane of the MEMS mirror apparatus. The method comprises driving the elongated drive plate into a first drive motion by the first actuator, the first drive motion being a see-saw drive motion of the elongated drive plate about a drive axis aligned with longitudinal dimension of the elongated drive plate, wherein the drive axis is aligned with the frame plane. The method then comprises conveying the first drive motion into a quasistatic see-saw motion of the reflector entity. The quasistatic see-saw motion of the reflector entity occurs about a quasi-static oscillation axis.

The conveying is performed by at least one lever extending from the elongated drive plate and at least one first spring coupling the at least one lever to the reflector entity or to the arm extending from the reflector entity. The quasi-static oscillation axis is aligned with a frame plane.

The disclosure is based on the idea of using electrostatic drive for driving a drive plate to a quasistatic oscillation and providing a conveying arrangement that conveys a relatively small drive motion of the drive plate to a significantly greater quasistatic oscillation motion of the reflector element.

An advantage of the arrangement and the method of the disclosure is that quasistatic oscillation can be accurately controlled in a low-pressure sealed cavity that provides low damping of the quasistatic oscillation. The arrangement is useful also in a device that requires such low-pressure sealed cavity for implementing a resonance mode high frequency oscillation of the reflector.

### BRIEF DESCRIPTION OF THE DRAWINGS

In the following the disclosure will be described in greater detail by means of preferred embodiments with reference to the accompanying drawings, in which
Figure 1 illustrates a two-axis raster scan.
Figures 2A to 2E illustrate a MEMS mirror device layer in rest.
Figure 3 illustrates parallel plate drive of a qs-oscillation.
Figures 4A and 4B illustrate the device layer of a MEMS mirror device with the MEMS mirror tilted about the qs-axis 100.
Figure 5 illustrates displacement magnitude of various parts of a MEMS mirror as function of drive voltage.
Figure 6 illustrates a hf-oscillation motion.
Figures 7A and 7B illustrate a MEMS mirror device layer according to a second embodiment.
Figures 8A and 8B illustrate a MEMS mirror device layer according to a third embodiment.
Figures 9A and 9B illustrate a MEMS mirror device layer according to a fourth embodiment.

Thickness of the device layer has been exaggerated for clarity and visualization. Drawings showing the device layer show some extra lines that are caused by drawing elements used in a design tool used for planning the designs but are not intended to appear in an actual silicon MEMS mirror device structure.

### DETAILED DESCRIPTION

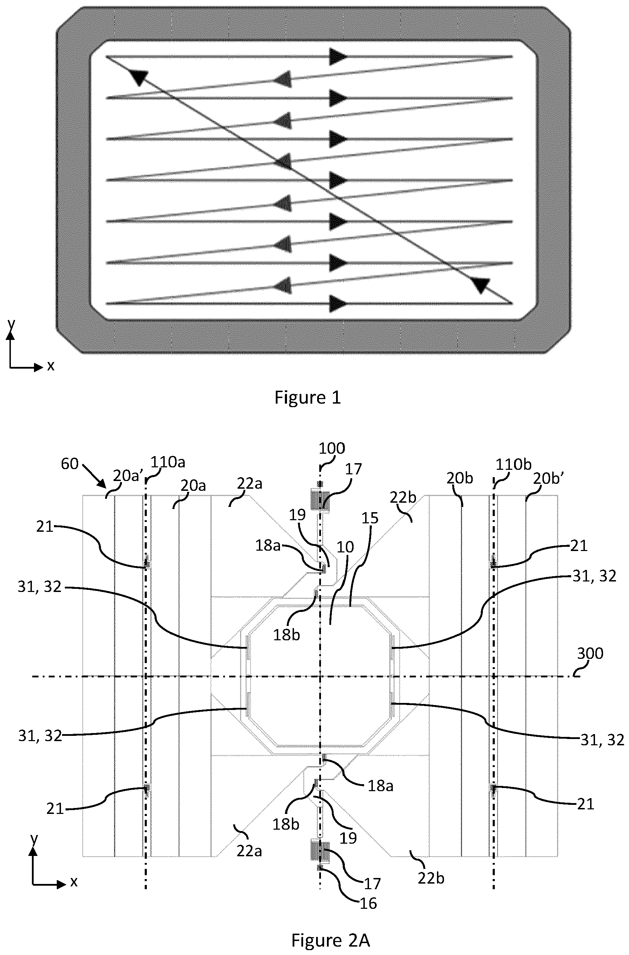

Figure 1 illustrates schematically the most typical a scanning movement to form an image, referred to as a two-axis raster scan that comprises the hf-oscillation in the horizontal (x-axis) direction for horizontal line forming and the slower frequency qs-oscillation in the vertical (y-axis) direction. To achieve such scanning movement with two-axis MEMS mirror, the hf-axis and qs-axis are mutually orthogonal. In a MEMS mirror, the hf-oscillation occurs preferably in resonance. An oscillation occurring in resonance refers to an oscillation that occurs at a natural resonance frequency of the MEMS mirror's reflector entity about the respective axis, depending primarily on mass, stiffness and damping of the MEMS system. Exemplary resonance frequency in the hf-oscillation may be in level of tens of kilohertz, for example 20 - 100 kHz.

The qs-axis mode resonance frequency, which refers to the lowest mechanical resonance frequency of the MEMS mirror in the respective direction is typically in level of 1 kHz. However, the qs-oscillation does not need to be driven in resonance. The qs-oscillation drive frequency is preferably between 50 Hz and 300 Hz. As can be seen from the scan pattern, the qs-oscillation may comprise periods when the MEMS mirror is momentarily held stationary at predefined angles and is moved periodically between these predefined angles to scan another horizontal line using the hf-oscillation. Preferably, the qs-oscillation drive frequency is between 50 Hz and 300 Hz, and hf-oscillation drive frequency is between 20 kHz and 100 KHz.

In this context, a term "actuator" refers to a piezoelectric or electrostatic structure which generates physical displacement (usually bending or translation) in response to a voltage applied to it or measures physical displacement. Actuators may also be referred to as transducers. The actuator may be used to drive oscillating movement when it is controlled with a periodic AC voltage signal, or to sense the movement that another actuator has generated. The purpose of having actuators in the MEMS mirror design is to move at least some parts out of xy-plane, also referred to as a frame plane. Moving parts of the MEMS mirror may comprise a frame, and everything inside the frame such as the reflector entity, suspension springs and at least part of actuators. Two states of the MEMS mirror may be defined: non-actuated state, when the moving parts are all parallel to xy-plane (the frame plane), and actuated state, when at least one of the moving parts is out of xy- plane (frame plane). Two types of actuators are discussed in this disclosure.

In this context, a reflector entity refers to an entity comprising either a reflector only or a reflector and a gimbal. In the qs-oscillation, the reflector entity moves as a single entity. If the MEMS mirror is configured for both qs-oscillation and hf-oscillation, coupling and actuators arranged between the reflector and the gimbal enables hf-oscillation of the reflector. Depending on the embodiment, the reflector entity may further comprise one or more arms extending from the reflector or the gimbal.

An electrostatic actuator for moving desired portions of the frame for tilting the reflector entity around the qs-oscillation axis preferably comprises relatively large, static electrode plates superposed with the respective moving drive plates of the MEMS mirror. Moving electrode plates of the electrostatic actuators are formed by the drive plate itself or are attached thereto. A distance increase caused by levers extending from the moving drive plate enables the small displacement between static electrodes and moveable electrodes of the drive plates to be conveyed into a large translation of the moving parts of the reflector entity about the qs-oscillation axis. The electrostatic actuator may also be referred to as the capacitive actuator.

A bending piezoelectric actuator for moving the reflector around the second, hf-oscillation axis may comprise piezoelectric layer and conductive layers, which transmit the voltage signal to the piezoelectric layers, deposited on an actuation spring. A material of the actuation spring may be an approximately 10 - 100 µm thick layer of silicon or similar material in at least one device layer, which is sufficiently thin to bend with the piezoelectric material when a voltage is applied.

The resonance frequency of the reflector entity is affected for example by the length and width of the suspension springs and by the length of the actuation springs of piezoelectric actuators. The main advantage of using piezoelectric actuators is that they require low voltage for large amplitude excitation.

Although the disclosure given herein uses a typical two-axis MEMS mirror as an example, the invention, in particular the driving arrangement for the qs-oscillation is also applicable to other MEMS mirror configurations, such as a one-axis MEMS mirror configured only for the qs-oscillation, and a two-axis MEMS mirror that is only driven into a qs-oscillation.

Figures 2A to 2D illustrate elements of a device layer 60 of an exemplary two-axis MEMS mirror according to a first embodiment. The device layer refers to a layer of the MEMS device that comprises moving parts thereof. Moving parts may comprise moving electrodes and mirror, levers, springs, to name a few.

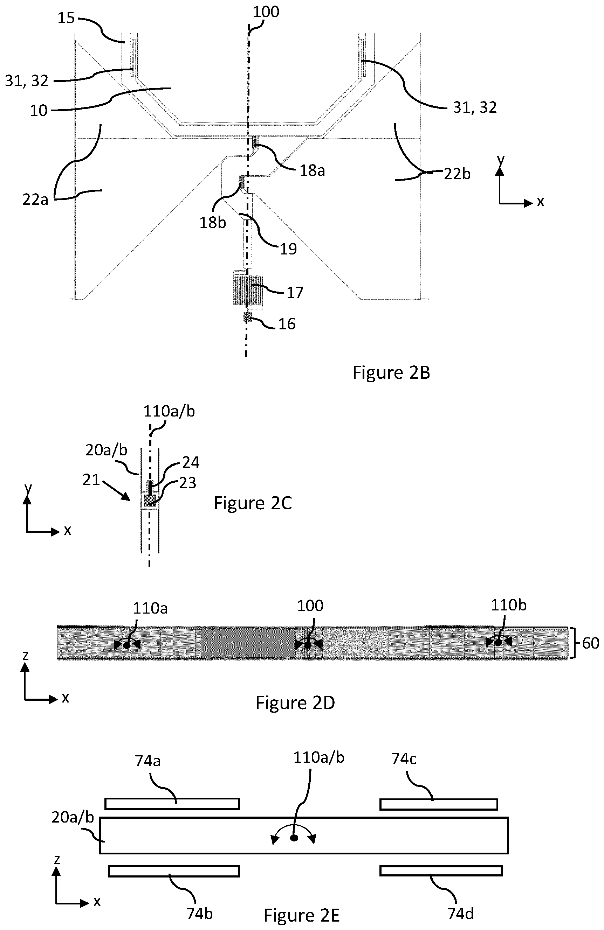

Figure 2A shows a lateral view of the device layer of the two-axis MEMS mirror according to a first embodiment in the xy-plane, also referred to as a frame plane. Figures 2B and 2C illustrate enlarged views of two different portions of the MEMS mirror device shown in the figure 2A.

The reflector entity, comprising a reflector 10 surrounded by a gimbal 15 for decoupling the two mutually orthogonal oscillation axes, is provided in the middle. The reflector 10 is preferably formed by a smooth silicon plate coated on one side with a thin, reflective coating, wherein thickness of the reflective coating depends of the reflected wavelength. The qs-oscillation of the reflector 10 is a see-saw oscillation about a quasi-static axis 100. When the reflector 10 is excited into the qs-oscillation, the gimbal 15 moves along with the reflector 10 so that these move essentially as a single, rigid reflector entity. A single-axis MEMS mirror that performs only qs-oscillation can be implemented using the same design but omitting the gimbal 15. The qs-oscillation is driven by electrostatic drive using parallel plate capacitors acting as electrostatic actuators, which may be considered as being of gap-closing type, wherein each one of the drive plates 20a, 20b forms one moveable electrode plate and one or more planar electrodes arranged on surface of an adjacent layer facing the respective drive plate forms the other, static electrode plate(s). As known in the art, a gap-closing electrostatic actuator applies an attractive force to the moveable electrode, i.e. the drive plate 20a, 20b or an electrode attached to the drive plate. Drive oscillation of drive plates 20a, 20b occurs as a see-saw oscillations of the drive plates 20a, 20b about respective, mutually parallel drive axes 110a, 110b. Preferably, the drive action of the qs-oscillation by means of the drive plates 20a, 20b is implemented using differential drive, applying simultaneous push and pull action towards the reflector entity.

Parallel plate electrodes formed by or attached to the drive plates 20a, 20b in the device layer and drive electrodes (not shown) are relatively large and can be driven with high drive voltages to generate high torque for driving the qs-oscillation. Relatively large drive plates 20a, 20b in this example refer to lateral area of each drive plate 20a, 20b that is preferably at least twice the area of the reflector entity. In this context, a high voltage is for example in level of tens of volts, for example between 40 volts and 60 volts, such as 50 volts. Amount of tilting of the drive plates 20a, 20b is adjusted by adjusting the drive voltage, and thus drive voltage can vary between zero volts (no drive, no tilting) to maximum allowed drive voltage, such as 50 volts. Drive plates 20a, 20b are suspended to drive plate suspension structures 21, which allow each drive plates 20a, 20b a see-saw motion about the respective drive axis 110a, 110b. Drive axes may also be referred to as second axes.

Figure 2C shows an enlarged view on a suspension structure 21 of a drive plate 20a/20b. An anchor 23 suspends the respective drive plate 20a/20b to fixed structure(s), typically at base layer and/or cap layer of the MEMS device, and the drive plate 20a/20b is coupled to the anchor 23 by a spring 24 that allows the desired see-saw motion of the respective drive plate 20a/20b about the respective drive axis 110a/110b.

The drive oscillation is conveyed to the qs-oscillation of the reflector entity by means of levers 22a, 22b, first springs 18a, 18b and arms 19. Arms 19 are suspended to arm suspension structures 16, by second springs 17, which at least allow the arms and thus the reflector entity to rotate about the qs-axis 100, which can also be referred to as a first axis. In this example, arms 19 extend from the gimbal 15. Levers 22a, 22b extend from the drive plates 20a, 20b. Although drawings show thin lines between levers 22a, 22b and respective drive plates 20a, 20b, each lever 22a, 22b and respective drive plate 20a, 20b preferably form an integral structure. By suitably dimensioning drive plates 20a, 20b, levers 22a, 22b, and coupling them to the gimbal 15 of the reflector entity, a small rotation angle of the drive plates 20a, 20b causes a significantly greater rotation angle of the reflector entity. If the device was designed for qs-oscillation only, no gimbal 15 is needed, in which case arms 19 may extend directly from the reflector 10:

In this example, the reflector entity is driven to the qs-oscillation from both sides of the reflector entity along the qs-axis 100.

First springs 18a, 18b are preferably positioned such that the first spring 18a that couples the first drive plate 20a via the respective lever 22a to the arm 19 is on the opposite side of the qs-axis 100 in comparison to the position of the first drive plate 20a. Likewise, the first spring 18b that couples the second drive plate 20b via the respective lever 22b to the arm 19 is on the opposite side of the qs-axis 100 in comparison to the second drive plate 20b. First springs 18a, 18b are preferably relatively loose in torsion mode, but stiff in other modes. In particular, first springs 18a, 18b should be stiff in the z-axis direction to enable the first springs 18a, 18b to push arms 19 up and down. This arrangement of the first springs 18a, 18b increases leverage by the levers 22a, 22b, and reduces torsional twisting deformation of the attachment between the levers 22a, 22b and the arm 19. This is because this arrangement causes rotation angles of the levers 22a, 22b and the arm 19 to occur mutually in the same direction so that angles between the levers 22a, 22b and the arm 19 are minimized, and thus less torsional stress is caused on the first springs 18a, 18b.

The hf-oscillation is a see-saw oscillation about a higher frequency axis, referred in short as the hf-axis 300. This hf-oscillation is preferably driven at the hf-oscillation resonance frequency by piezoelectric actuators 31, which may be arranged on third springs 32 coupling the reflector 10 and the gimbal 15. Piezoelectric actuators 31 may be for example aluminium nitride (AIN) film or piezoelectric lead-zirconate-titanate (PZT) film deposited on the top or bottom face of the third springs 32 comprised in the device layer 60. In this example, third springs 32 are formed as cantilevers extending from the gimbal 15 in the y-axis direction and attached to the reflector 10 at their outer end by narrow beams which allow the intended hf-oscillation motion to the reflector 10.

Figure 2D shows a side view of the device layer 60 of the two-axis MEMS mirror device in the xz-plane when in rest. Drawing is not in scale, thickness of the device layer 60 has been exaggerated for visualization. When the MEMS mirror is in rest, i.e. not driven to any motion, all moving parts of the device layer 60 are essentially aligned with the frame plane. (xy-plane)

Figure 2E illustrates schematically one possible arrangement for implementing differential drive of the drive plates 20a, 20b. Static electrodes 74a and 74b apply electrostatic force to the moveable electrode formed by or on the drive plate 20a/20b in mutually opposite directions at the left-hand side of the respective drive axis 110a/110b and, correspondingly, static electrodes 74c and 74d apply electrostatic force to the respective drive plate 20a/20b in mutually opposite directions on the right-hand side of the respective drive axis 110a/110b. By applying a pulling electrostatic force by static electrodes 74a and 74d, the drive plate 20a/20b can be driven differentially in the clockwise direction on the opposite sides of the drive axis 110a/110b. By applying pulling electrostatic force by static electrodes 74b and 74c, the drive plate 20a/20b can be driven differentially in the counterclockwise direction on the opposite sides of the drive axis 110a/110b. By alternating between the two driving directions, the drive plate 20a/20b can be driven in a first drive motion about the drive axis 110a/110b. The first drive motion is a quasistatic see-saw motion about the drive axis 110a/110b.

According to an alternative embodiment, only two static electrodes are used for differential drive of each drive plate, one static electrode at each side of the respective drive axis. Preferably, static electrodes 74a and 74c above the drive axis are applied because it is typically easier to manufacture static electrodes in a cap structure than in a substrate below the drive plates. To illustrate this alternative, static electrodes 74b and 74d are shown with dotted line.

In such case, the static electrode 74a applies electrostatic force on the respective moveable electrode formed by the drive plate 20a/20b on the left-hand side of the respective drive axis 110a/110b and, correspondingly, static electrode 74c applies electrostatic force on the respective drive plate 20a/20b on the right-hand side of the respective drive axis 110a/110b. By applying a pulling electrostatic force by the static electrode 74a, the drive plate 20a/20b can be driven differentially in the clockwise direction. By applying pulling electrostatic force by static electrode 74c, the drive plate 20a/20b can be driven differentially in the counterclockwise direction. By alternating between the two driving directions, the drive plate 20a/20b can be driven in a first drive motion about the drive axis 110a/110b. The first drive motion is a quasistatic see-saw motion about the drive axis 110a/110b.

By having four electrodes 74a, 74b, 74c and 74d as in the Figure 2E, drive force can be increased, but this increases complexity of manufacturing process and thus add cost.

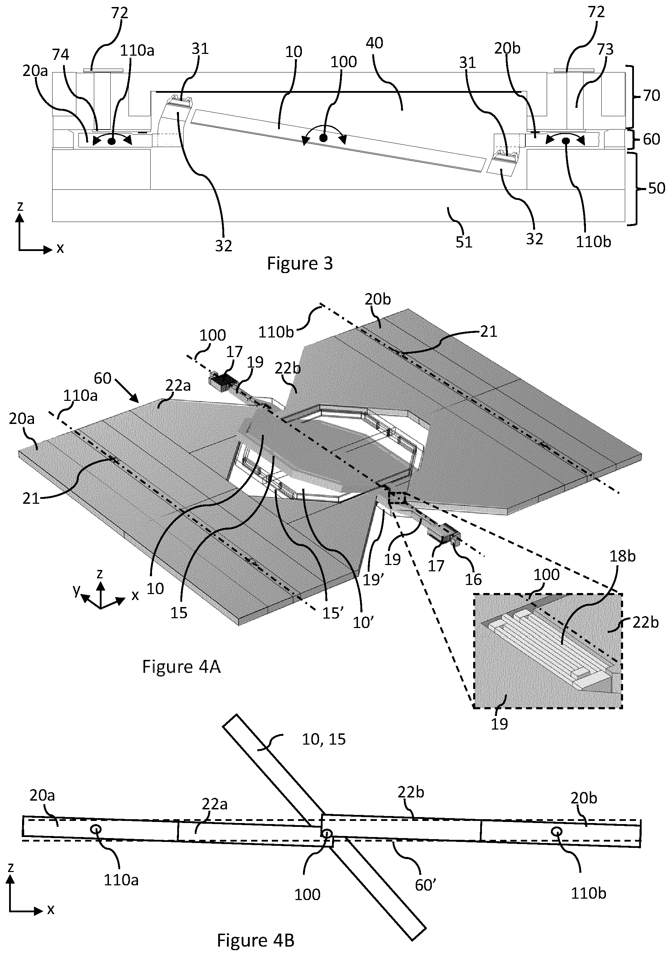

Figure 3 illustrates parallel plate drive by means of a cross-section of an exemplary MEMS mirror device. The reflector 10 comprised in a device layer 60 is enclosed within a low-pressure cavity 40 formed by a hermetic enclosure between a cap layer 70 and a base layer 50. In this example, static electrodes 74, connection pads 72, and conducting vias 73 for providing an electrical connection between the connection pads 72 and static electrodes 74 are provided in the cap layer 70 for feeding drive voltage(s) to the static electrodes 74. The base layer 50 comprises a transparent window 51, through which a light beam traverses to and from the reflector 10. Alternatively, or additionally, static electrodes 74 with electrical connections for feeding drive voltage(s) may be provided at the base layer 50.

The cap layer 70 and the base layer 50 are preferably formed with recesses towards the reflector 10, which increase gap between opposing faces thereof, so that the low-pressure cavity 40 allows greater displacements in the z-axis direction for enabling tilting of the reflector 10 and the optional gimbal.

In the figure 3, the reflector 10 is shown in a tilted position driven by means of the static electrodes 74 of electrostatic actuators, which cause the drive plates 20a, 20b to rotate about the respective drive axes 110a, 110b as illustrated by the curved arrows. As can be seen from this illustration, there is very little room between the drive plates 20a, 20b to move between the cap layer 70 and the base layer 50. In an exemplary design, maximum displacement in z-axis dimension at the outer edges of the drive plates 20a, 20b is in range or 1 to 2 µm. Preferably, the maximum deflection angle of the reflector 10 is 15 degrees. Maximum displacement of a reflector 10 in the z-axis dimension at outer edges of the reflector 10 to be tens or hundreds of micrometers. For example, a reflector with 1 mm diameter thus has maximum displacement of about 250 µm. Such great difference between magnitude of maximum displacement is facilitated by a structure comprising levers 22a, 22b, first springs 18a, 18b and arms 19 such as those illustrated in the figure 2A, but not shown in the figure 3.

Figure 3 also illustrates cross-sections of third springs 32 at both sides of the reflector 10. Static electrodes 74 are used for electrostatically driving the drive plates 20a, 20b into the first drive motion that is conveyed to the reflector 10 to cause the reflector 10 to be driven into the quasistatic oscillation. The first drive motion is thus also a quasistatic oscillation, although with smaller magnitude than the quasistatic oscillation of the reflector 10. Third springs 32 are provided with piezoelectric actuators 31 for driving the hf-oscillation of the reflector 10. This illustrative example does not show the gimbal.

Figures 4A and 4B illustrate the device layer 60 of an exemplary two-axis MEMS mirror device according to the first embodiment, when the reflector 10 is tilted by the qs-oscillation motion about the qs-axis 100.

Figure 4A illustrates a perspective view of the device layer 60 of the MEMS mirror device. Original, rest positions of the reflector 10, the gimbal 15 and the arm 19 are shown with wireline drawings 10', 15' and 19' to illustrate the great extent of tilting of the reflector 10, the gimbal 15 and the arm 19 about the qs-axis 100. Enlarged portion of figure 4A shows a first spring 18b that provides a relatively loose attachment between the lever 22a and the arm 19 to allow tilting of the arm 19 and the gimbal 15, and thus the entire reflector entity by the qs-oscillation motion and to reduce torsion twisting deformation of the arm 19.

Figure 4B illustrates schematically a cross-section of the device layer 60 as seen in the figure 4A. Rest position of the device layer 60 is illustrated with the dotted line rectangle 60'. The drive plate 20a is tilted about the first drive axis 110a and the drive plate 20b is equally tilted about the second drive axis 110b to effectuate a push-pull effect for driving the reflector entity. As explained above, maximum displacement of drive plates 20a, 20b in the z-axis direction out of the frame plane is quite limited, for example just 1 to 2 µm because respective plate electrodes are positioned just above and/or below the drive plates 20a, 20b to facilitate high drive force and high torque. Levers 22a and 22b, which extend from the drive plates 20a, 20b are within the low-pressure cavity 40 together with the reflector entity to enable greater displacements thereof in z-axis direction.

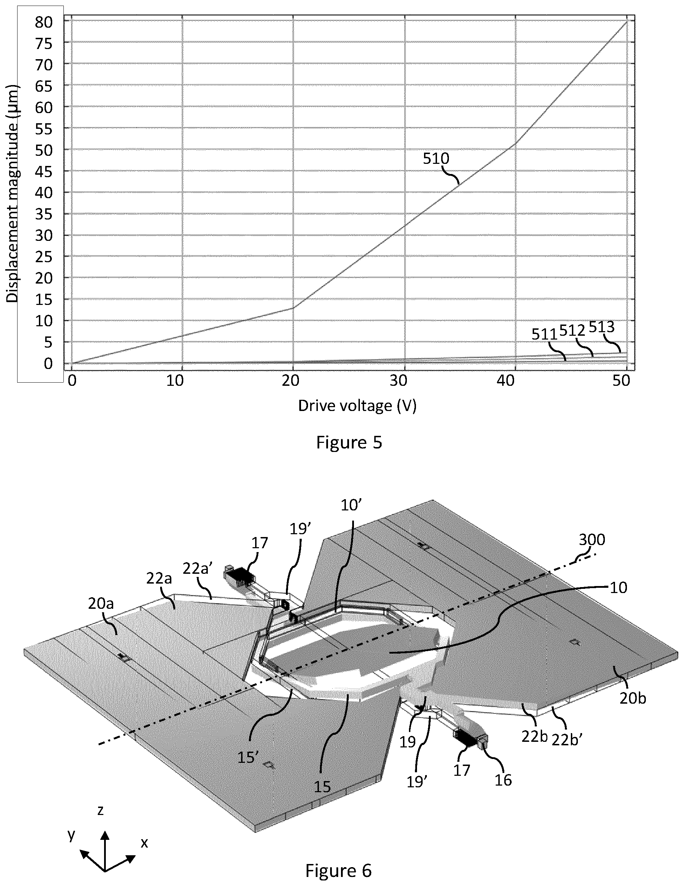

Figure 5 illustrates dependence of various displacement magnitudes in z-axis direction as a function of drive voltage in a MEMS mirror device according to the first embodiment when driven in the qs-oscillation. Curve 510 illustrates maximum displacement of the reflector entity, measured at its outer edge, curve 513 illustrates maximum displacement of the drive plate, as measured on the outer edge of a drive plate, curve 512 illustrates displacement of the drive plate at half-way between the drive axis and the drive axis and curve 511 illustrates displacement of the drive plate at the drive axis. In this exemplary, non-limiting design, maximum displacement of the reflector entity can be 40 times the maximum displacement of the maximum displacement of the drive plate 20a, 20b at outer edge thereof, furthest away from the respective drive axis 110a, 110b.

Figure 6 illustrates the device layer 60 of the MEMS mirror device according to the first embodiment in hf-oscillation motion. The simulated image shows a situation in which the reflector 10 is tilted into its maximum rotation angle about the hf-axis 300, so that the outer edge of the reflector 10 has reached its maximum deflection from the frame plane in which it resides when not driven to any motion.

Preferably, the hf-oscillation is driven using piezoelectric actuators 31 arranged on the third springs 32 coupling the reflector 10 to the gimbal 15. An example of piezoelectric actuators 31 arranged on the third springs 32 can be seen in the Figure 2. This causes the reflector 10 to oscillate in a see-saw motion about the hf-axis 300. Preferably, frequency of the hf-oscillation is a resonance frequency of the reflector 10 as determined by shape and mass of the reflector 10 as well as characteristics of the third springs 32. In this embodiment the hf-oscillation also causes the arms 19 to move in the z-axis direction, due to the second springs 17, so that also the gimbal 15 becomes somewhat tilted about the hf-axis 300, which is not a desired motion. Initial, rest position of the arms 19 in the frame plane is illustrated with wireline shapes 19'. Likewise, initial, rest position of the reflector 10 and the gimbal 15 are illustrated with respective wireline shapes 10' and 15'. The hf-oscillation may further cause levers 22a, 22b to bend slightly from their rest positions 22a' and 22b', because these are coupled to the arms 19 by the first springs.

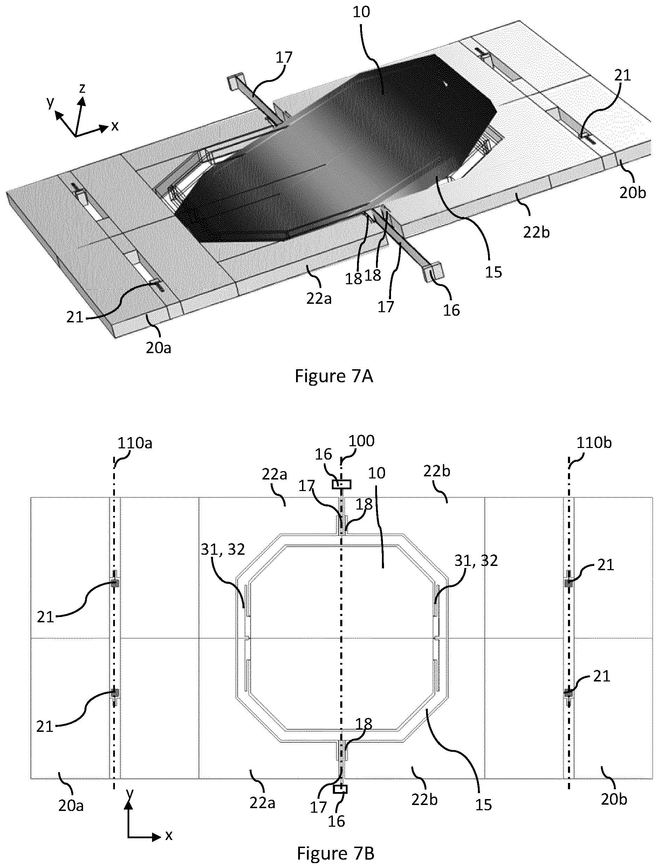

Figures 7A and 7B illustrate a second embodiment, which is a simplified one. Figure 7A illustrates the reflector element comprising the reflector 10 and a gimbal 15 in a tilted position in a simulated qs-oscillation. Figure 7B shows a lateral view of the device layer of the two-axis MEMS mirror according to a second embodiment in the frame plane. In this embodiment, levers 22a, 22b are attached to the reflector entity on the same side of the quasi-static axis 100 as the respective drive axis 110a or 110b. Suspension of the reflector entity can be simplified, since levers 22a, 22b can be directly coupled to the reflector entity by means of first springs 18 formed as beams without need to have a separate, stiff arm. The reflector entity is suspended by second springs 17 to (arm) suspension structures 16.

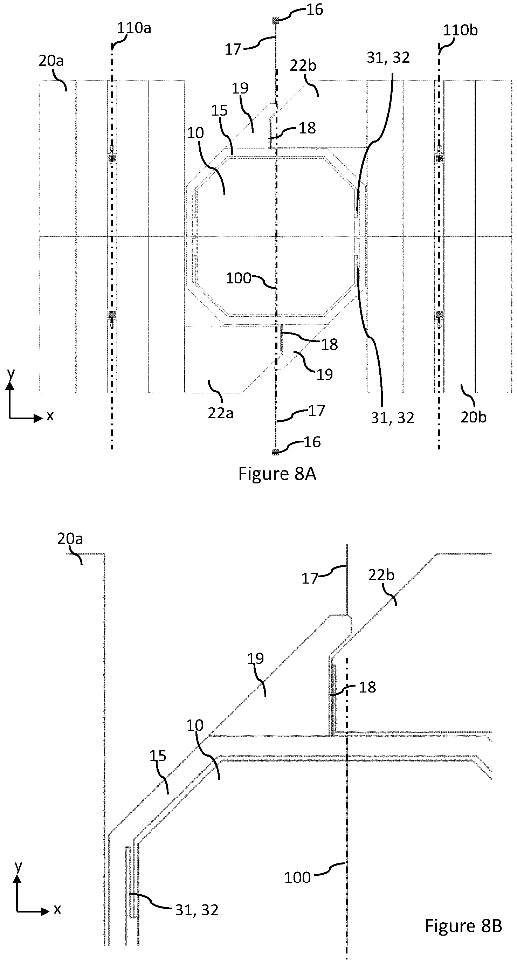

Figures 8A and 8B illustrate lateral view of a MEMS mirror device layer according to a third embodiment in which drive motion of the driving plates 20a, 20b is conveyed by a respective single lever 22a, 22b at each side of the reflector entity. Figure 8B shows an enlarged portion of Figure 8A to disclose in more detail coupling arrangements of the lever 22b and the arm 19. Each drive plate 20a, 20b is coupled to the reflector entity only by the respective single lever 22a, 22b and the first spring 18. Like in the first embodiment, attachment of the lever 22a to the reflector entity by the first spring 18 is on the side of the qs-axis 100 that is away from the respective drive axis 110a and attachment of the lever 22b to the reflector entity by the first spring 18 is on the side of the qs-axis 100 that is away from the respective drive axis 110b to maximise the achievable tilting angle of the reflector entity. Arms 19 extending from the reflector entity (in this example from the gimbal 15) are suspended to arm suspension structures 16 by second springs 17, which in this embodiment are formed as long, thin beams extending in the direction of the quasi-static axis 100 and attached to the gimbal 15 for enabling qs-oscillation of the reflector entity. This arrangement provides a looser suspension for the hf-axis than the first embodiment. Like in the first embodiment, levers 22a, 22b conveying the drive oscillation to the qs-oscillation of the reflector entity each attach by respective first spring 18 to the arm 19 on the opposite side of the qs-axis 100 than the respective drive plate 20a, 20b. Drive axes 110a, 110b are parallel to the qs-axis 100.

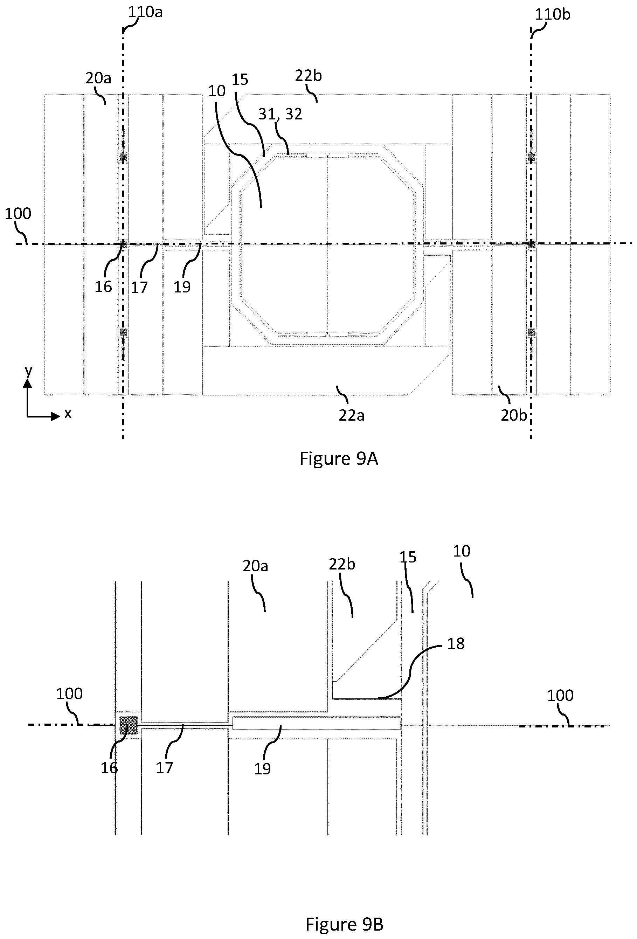

Figures 9A and 9B illustrate a fourth embodiment, in which even more leverage is achieved by rotating the reflector entity with further 90 degrees in comparison with the third embodiment to further increase leverage and thus increase achievable maximum amount of tilt of the reflector entity without increasing maximum amount of tilting of the drive plates 20a, 20b. Figure 9B shows an enlarged portion of Figure 9A to disclose in more detail coupling arrangements of the lever 22b and the arm 19. In the fourth embodiment drive axes 110a, 110b are orthogonal to the qs-axis 100. Arms 19 extend along the qs-axis and are suspended to arm suspension structures 16 by second springs 17 also extending along the qs-axis. In this embodiment, second springs 17 are formed as beams which allow the arms 19 to rotate about the qs-axis 100. Lever 22b is coupled to the gimbal 15 by the first spring 18, which is arranged off the qs-axis 100 to cause the intended qs-oscillation about the qs-axis 100. The gimbal 15 indirectly couples the lever 22b with the reflector 10 via the first spring 18.

It is apparent to a person skilled in the art that as technology advanced, the basic idea of the invention can be implemented in various ways. The invention and its embodiments are therefore not restricted to the above examples, but they may vary within the scope of the claims.

## Claims

1. A MEMS mirror apparatus comprising:
- a reflector entity comprising a reflector, or a reflector and a gimbal, wherein the reflector entity is configured to be driven into a quasistatic see-saw motion about a first axis, referred to as a quasi-static oscillation axis, and wherein the quasi-static oscillation axis is aligned with a frame plane of the MEMS mirror apparatus, and
- at least one elongated drive plate configured to be driven into a first drive motion, wherein the first drive motion is a quasi-static see-saw drive motion of the at least one elongated drive plate about a second axis, referred to as a drive axis, aligned with longitudinal dimension of the elongated drive plate, and wherein the drive axis is aligned with the frame plane,
- at least one lever extending from the at least one elongated drive plate and at least one first spring coupling the at least one lever to the reflector entity or to an arm extending from the reflector entity, wherein the at least one lever and the at least one first spring are configured to convey the first drive motion towards the reflector entity to cause the quasistatic see-saw motion of the reflector entity, and
- at least one first actuator, wherein the at least one first actuator is an electrostatic actuator comprising a moveable electrode plate formed by or attached to the respective elongated drive plate and a static electrode plate superposed with the moveable electrode plate above or below the frame plane.

2. The MEMS mirror apparatus according to claim 1, wherein the quasi-static oscillation axis and the drive axis are parallel and have a non-zero distance from each other, and wherein
- the at least one lever comprises i) a first end extending from the elongated drive plate along the frame plane in a direction orthogonal to the drive axis and ii) a second end attached to the reflector entity or to the arm by the at least one first spring, and
- attachment point of the at least one first spring and the respective one of said one or more levers and attachment point of the at least one first spring and the reflector entity or the arm are in vicinity of the quasi-static oscillation axis.

3. The MEMS mirror apparatus according to claim 2, wherein
- the second end of the at least one lever extends in the frame plane across the quasi-static oscillation axis and the at least one first spring is disposed at the side of the quasi-static oscillation axis that is away from the respective drive axis, and
- a pair of arms extend from the reflector entity in mutually opposite directions at two opposite sides of the reflector entity in direction of the quasi-static oscillation axis, wherein the at least one lever is coupled to the respective arm by said at least one first spring, or the at least one lever is coupled to the reflector entity by said at least one first spring.

4. The MEMS mirror apparatus according to anyone of claims 1 to 3, comprising a single lever extending from the respective elongated drive plate, wherein the single lever is configured to convey the first drive motion of the respective elongated drive plate towards the reflector entity at one side of the reflector entity to cause the quasistatic see-saw motion.

5. The MEMS mirror apparatus according to any one of claims 1 to 3, comprising two levers extending from the respective elongated drive plate, wherein said two levers are at two opposite sides of the reflector entity, and wherein the two levers are configured to convey the first drive motion of the respective elongated drive plate towards the reflector entity at two opposite sides of the reflector entity to cause the quasistatic see-saw motion of the reflector entity.

6. The MEMS mirror apparatus according to claim 1, wherein the quasi-static oscillation axis is perpendicular to the drive axis, and
- the at least one lever comprises i) a first end extending from the elongated drive plate along the frame plane in a direction perpendicular to the drive axis and ii) a second end attached to the reflector entity by the at least one first spring at the side of the reflector entity that is away from the respective drive axis, and
- attachment point of the at least one first spring and the respective one of said one or more levers and attachment point of the at least one first spring and the reflector entity are in vicinity of the quasi-static oscillation axis.

7. The MEMS mirror apparatus according to any one of claims 1 to 7, wherein the reflector entity is suspended to at least two suspension structures disposed on the quasi-static oscillation axis on two opposite sides of the reflector entity, and wherein the reflector entity is coupled to each suspension structure by a respective second spring or the arm extending from the reflector entity is attached to the respective suspension structure by the respective second spring.

8. The MEMS mirror apparatus according to any one of claims 1 to 6, wherein
- the first drive motion of at least one the drive plate has a maximum deflection amplitude that is in the range of 1/100 to 1/1000 of the longitudinal dimension of the elongated drive plate.

9. The MEMS mirror apparatus according to any one of claims 1 to 7, wherein
- a gap between the at least one elongated drive plate and the respective static electrode plate driving the first drive motion of the at least one elongated drive plate is equal to or less than 2 µm, and
- length of the at least elongated drive plate, determined along the drive axis, is equal to or more than 1 mm.

10. The MEMS mirror apparatus according to any one of claims 1 to 8, wherein the reflector entity comprises a reflector and a gimbal configured to enable separation of the quasistatic see-saw motion of the reflector and the gimbal and a second see-saw motion of the reflector, the MEMS mirror apparatus further comprising:
- at least one second actuator configured to drive the reflector in the second see-saw motion having a second drive frequency, wherein the second see-saw motion is orthogonal to the quasistatic see-saw motion, and wherein the second drive frequency is between 20 kHz and 100 kHz, and a first drive frequency of the quasistatic oscillation mode is between 50 Hz and 300 Hz.

11. The MEMS mirror apparatus according to claim 9, wherein the at least one second actuator is a piezoelectric actuator.

12. A method for driving oscillation of a reflector entity of a MEMS mirror device comprising:
- a reflector entity comprising a reflector or a reflector and a gimbal,
- at least one elongated drive plate,
- at least one lever extending from the at least one elongated drive plate and at least one first spring coupling the at least one lever to the reflector entity or to an arm extending from the reflector entity, and
- at least one first actuator, wherein the first actuator is an electrostatic actuator comprising a moveable electrode plate formed by or attached to the respective elongated drive plate and a static electrode plate superposed with the moveable electrode plate above or below a frame plane of the MEMS mirror apparatus,
the method comprising:
- driving the elongated drive plate into a first drive motion by the first actuator, and wherein first drive motion is a see-saw drive motion of the at least one elongated drive plate about a drive axis aligned with longitudinal dimension of the elongated drive plate, wherein the drive axis is aligned with the frame plane, and
- conveying the first drive motion into a quasistatic see-saw motion of the reflector entity, wherein the quasistatic see-saw motion of the reflector entity occurs about a quasi-static oscillation axis, wherein the conveying is performed by at least one lever extending from the elongated drive plate and at least one first spring coupling the at least one lever to the reflector entity or to the arm extending from the reflector entity, and wherein the quasi-static oscillation axis is aligned with a frame plane.
